(19)

Europäisches
Patentamt
European
Patent Office
Office européen
des brevets

(11) **EP 3 778 211 A1**

(12) **EUROPEAN PATENT APPLICATION**
published in accordance with Art. 153(4) EPC

(43) Date of publication:
**17.02.2021 Bulletin 2021/07**

(21) Application number: **19776767.6**

(22) Date of filing: **28.03.2019**

(51) Int Cl.:
***B32B 5/18*** *(2006.01)*        ***B32B 5/28*** *(2006.01)*
***C08J 5/04*** *(2006.01)*

(86) International application number:
**PCT/JP2019/013620**

(87) International publication number:
**WO 2019/189583 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2018 JP 2018069183**

(71) Applicant: **Toray Industries, Inc.
Tokyo, 103-8666 (JP)**

(72) Inventors:
• **FUJIOKA, Takashi**
  **Iyo-gun, Ehime 791-3193 (JP)**
• **SHINOHARA, Kotaro**
  **Iyo-gun, Ehime 791-3193 (JP)**
• **HONMA, Masato**
  **Iyo-gun, Ehime 791-3193 (JP)**

(74) Representative: **Mewburn Ellis LLP
Aurora Building
Counterslip
Bristol BS1 6BX (GB)**

(54) **MOLDED ARTICLE AND METHOD FOR MANUFACTURING MOLDED ARTICLE**

(57)    Provided is a molded article that is excellent in rigidity and lightweightness and is provided with a water-proof property, as well as a method for producing the molded article. The molded article of the present invention has a continuous porous body provided with a thin film layer, the continuous porous body having a void that is continuous in a thickness direction of the continuous porous body, and the thin film layer having a solid additive and a resin. A permeation rate of water from a surface of the molded article on a side of the thin film layer is 10% or less.

EP 3 778 211 A1

**Description**

Field

The present invention relates to a molded article and a method for producing a molded article excellent in waterproof property.

Background

In recent years, improvement in lightweightness is increasingly required in the market of industrial products such as those used in an automobile, an aircraft, and a sport good. In order to meet such a requirement, a fiber-reinforced composite material that is light and excellent in mechanical characteristics is being utilized widely in various industrial uses. In particular, in order to further improve the lightweightness thereof, structural bodies that are formed of a resin, a reinforcing fiber, and a void, and that are excellent in mechanical characteristics have been proposed (see, for example, Patent Literature 1).

In the products using the fiber-reinforced composite material, there are occasions when a decoration layer is necessary in order to provide designability thereto (see, for example, Patent Literature 2). In the fiber-reinforced composite material having a void that is continuous in a thickness direction, in the case when this is used in the products such as those used outdoor, there occur problems such as an increase in the mass thereof when a liquid penetrates thereinto via the void, so that the composite material needs to be provided with a waterproof property. For example, an olefin resin laminate sheet is disclosed in which a continuous foamed olefin resin layer having a void is integrated and laminated with a non-foamable olefin resin layer (see, for example, Patent Literature 3). A technology has also been proposed to form a skin material on the surface of a continuous porous body (see, for example, Patent Literature 4).

Citation List

Patent Literature

Patent Literature 1: Japanese Patent No. 6123965
Patent Literature 2: Japanese Laid-open Patent Publication No. 2016-78451
Patent Literature 3: Japanese Laid-open Patent Publication No. H05-124143
Patent Literature 4: International Publication No. 2015/029634

Summary

Technical Problem

However, the waterproof property has been considered neither in the non-foamable olefin resin layer of Patent Literature 3 nor in the skin layer of Patent Literature 4. In addition, these production methods are limited and cumbersome because, among others, the skin layer is formed under the unfoamed state thereof.

The present invention was made in the light of the circumstances as described above; and thus, the present invention intends to provide: a molded article that is excellent in rigidity and lightweightness and has a waterproof property; and a method for producing the molded article.

Solution to Problem

A molded article according to the present invention includes a continuous porous body provided with a thin film layer, the continuous porous body having a void that is continuous in a thickness direction of the continuous porous body, the thin film layer including a solid additive and a resin. A permeation rate of water from a surface of the molded article on a side of the thin film layer is 10% or less.

A molded article according to the present invention includes a continuous porous body provided with a thin film layer, the continuous porous body having a void that is continuous in a thickness direction of the continuous porous body, the thin film layer including a solid additive and a resin. A permeation rate of a solution from a surface of the molded article on a side of the thin film layer is 30% or less, a contact angle of the solution on a glass substrate being 60° or less, which is measured in accordance with JIS R3257 (1999).

A method for producing a molded article according to the present invention is a method for producing any one of the molded articles. The method includes applying a resin mixture of the solid additive and the resin to the continuous porous body, and thereafter, heating the resin mixture to form the thin film layer.

Advantageous Effects of Invention

According to the molded article and the method for producing the molded article of the present invention, a molded article that is excellent in rigidity and lightweightness and is provided with a waterproof property can be readily obtained.

Brief Description of Drawings

FIG. 1 is a schematic drawing depicting one example of a dispersion state of the reinforcing fibers in the reinforcing fiber mat according to the present invention.
FIG. 2 is a schematic drawing depicting one example of the production equipment of the reinforcing fiber mat according to the present invention.
FIG. 3 is a drawing to describe production of the continuous porous body according to the present invention.
FIG. 4 is a drawing to describe the continuous porous body having a hemispherical shape according to the present invention.

Description of Embodiments

Hereinafter, the molded article and the method for producing the molded article according to the present invention will be described.
The molded article according to a first embodiment of the present invention is a molded article having a continuous porous body provided with a thin film layer, the continuous porous body having a void that is continuous in a thickness direction of the continuous porous body, and the thin film layer having a solid additive and a resin; and a permeation rate of water from a surface of the molded article on a side of the thin film layer is 10% or less.

Continuous Porous Body

In the molded article of the present invention, the continuous porous body includes a reinforcing fiber, a matrix resin, and a void.
In the continuous porous body of the present invention, illustrative examples of the reinforcing fiber include: metal fibers such as aluminum, yellow copper, and stainless steel; carbon fibers such as a PAN type, a rayon type, a lignin type, and a pitch type; insulating fibers such as graphite fiber and a glass; organic fibers such as aramid, PBO, polyphenylene sulfide, polyester, acrylic, nylon, and polyethylene; and inorganic fibers such as silicon carbide and silicon nitride. In addition, these fibers whose surfaces have been surface-treated may be used as well. Illustrative examples of the surface treatment include, in addition to an attachment treatment with a metal as a conductive body, a treatment with a coupling agent, a treatment with a sizing agent, a treatment with a binding agent, and an attachment treatment with an additive. These fibers may be used singly, or two or more of them may be used concurrently. Of these, in view of a lightweight effect, carbon fibers such as a PAN type, a pitch type, and a rayon type, these being excellent in a specific strength and a specific rigidity, are preferably used. In view of enhancement in economy of the continuous porous body to be obtained, a glass fiber is preferably used; and especially in view of a balance between an economy and mechanical characteristics, a concurrent use of a carbon fiber and a glass fiber is preferable. In view of enhancement in a shock-absorbing property and a shape-formability of the continuous porous body to be obtained, an aramid fiber is preferably used; and especially in view of a balance between mechanical characteristics and a shock-absorbing property, a concurrent use of a carbon fiber and an aramid fiber is preferable. In view of enhancement in conductivity of the continuous porous body (A) to be obtained, a metal fiber formed of a conductive metal, as well as a reinforcing fiber covered with a metal such as nickel, copper, or ytterbium may also be used. Of these, a reinforcing fiber selected from the group consisting of a metal fiber, a pitch type carbon fiber, and a PAN type carbon fiber may be preferably used; these fibers being excellent in mechanical characteristics such as strength and an elastic modulus.
It is preferable that the reinforcing fibers are discontinuous and dispersed randomly in the continuous porous body. It is more preferable that the dispersion state of the reinforcing fibers is in the almost monofilament-like state. The reinforcing fiber in the embodiment like this can be readily shaped into a complex shape upon molding a precursor of the continuous porous body in the sheet-like form by means of an external force. In addition, the reinforcing fiber in the embodiment like this can densify the voids formed by the reinforcing fibers, so that a weak portion in the tip of the fiber bunch of the reinforcing fibers in the continuous porous body can be minimized; and thus, in addition to excellent reinforcing efficiency and reliability, an isotropy can be provided. In addition, the continuous porous body can be readily molded not only to a flat plate but also to complex shapes such as a hemispherical shape and a concave-convex shape while keeping the rigidity thereof.

Here, the substantially monofilament-like state means that the reinforcing fiber single thread exists as a strand of less than 500 fine fiber threads. More preferably, they are dispersed in a monofilament-like state, namely in the state of a single thread.

Here, the dispersion in the substantially monofilament-like state or in the monofilament-like state means that the ratio of the single fibers having the two-dimensional orientation angle of 1° or more (hereinafter, this is also called a fiber dispersion rate) is 80% or more in the reinforcing fibers that are randomly selected in the continuous porous body; in other words, this means that the bunch in which 2 or more single fibers contact in parallel is less than 20% in the continuous porous body. Accordingly, it is especially preferable here that a mass fraction of the fiber bunch including 100 or less filaments at least in the reinforcing fibers be 100%.

It is especially preferable that the reinforcing fibers be dispersed randomly. Here, the random dispersion of the reinforcing fibers means that an arithmetic average value of the two-dimensional orientation angle of the reinforcing fibers that are randomly selected in the continuous porous body is in the range of 30° or more and 60° or less. The two-dimensional orientation angle is an angle formed between a single fiber of the reinforcing fibers and a single fiber intersecting with the beforementioned single fiber; and this is defined as the angle in the acute angle side in the range of 0° or more and 90° or less among the angles formed by the intersecting single fibers with each other.

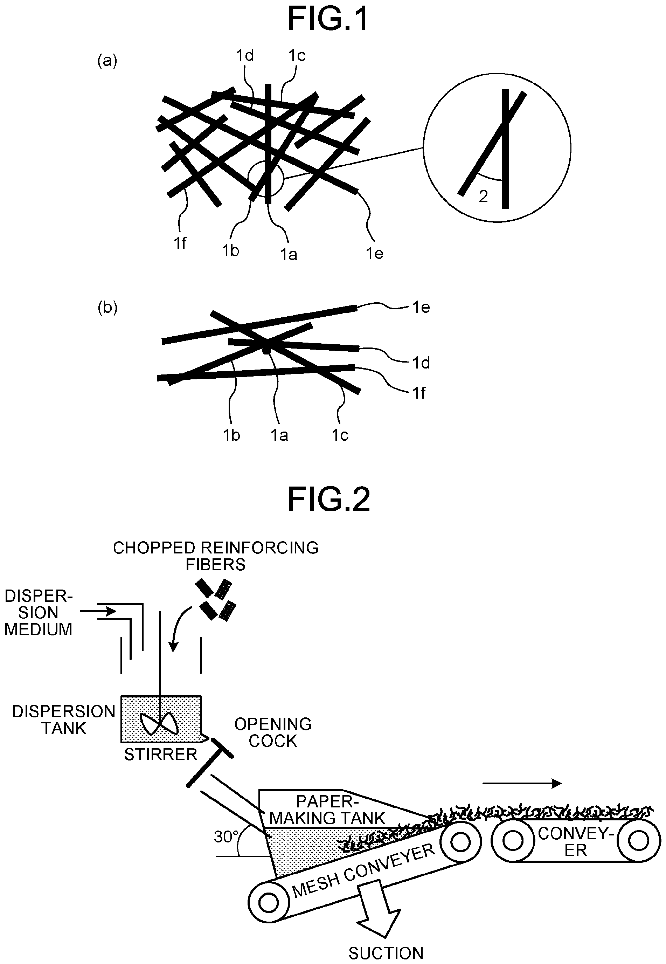

This two-dimensional orientation angle will be further elaborated by referring to the drawings. In FIG. 1(a) and FIG. 1(b), taking the single fiber 1a as a standard, the single fiber 1a intersects with other single fibers 1b to 1f. Here, the term "intersect" means the state in which the standard single fiber is observed to intersect with other single fiber in the observed two-dimensional plane; and thus, the single fiber 1a does not necessarily contact with other single fibers 1b to 1f, so that this does not exclude the state in which these fibers are observed to intersect with each other upon projection. Namely, with regard to the single fiber 1a as the standard, all of the single fibers 1b to 1f are the objects for evaluation, in which in FIG. 1(a), the two-dimensional orientation angle is the angle in the acute angle side in the range of 0° or more and 90° or less among the two angles formed by the intersecting two single fibers.

There is no particular restriction as to the measurement method of the two-dimensional orientation angle. One example thereof is to observe the orientation of the reinforcing fiber (A1) from the surface of the constitution element. The average value of the two-dimensional orientation angles is measured with the following procedure. Namely, the average value of the two-dimensional orientation angles of a single fiber randomly selected (single fiber 1a in FIG. 1) with all the single fibers that intersect therewith (single fibers 1b to 1f in FIG. 1) is measured. For example, in the case that a certain single fiber intersects with many other single fibers, 20 of the other single fibers intersecting therewith are randomly selected; and an arithmetic average value of these measured values may be used as a substitute. This measurement is repeated five times in total using other single fiber as the standard; and the arithmetic average value thereof is calculated as the arithmetic average value of the two-dimensional orientation angles.

When the reinforcing fibers are dispersed randomly and in the substantially monofilament-like state, the performance provided by the reinforcing fibers dispersed in the substantially monofilament-like state described above can be maximized. In addition, an isotropy can be given to the mechanical characteristics in the continuous porous body. From these viewpoints, the fiber dispersion rate of the reinforcing fibers is preferably 90% or more, while it is more preferable when this rate approaches to 100% as close as possible. The arithmetic average value of the two-dimensional orientation angles of the reinforcing fibers is preferably in the range of 40° or more and 50° or less, while it is more preferable when it approaches to the ideal angle of 45° as close as possible. In the preferable range of the two-dimensional orientation angle, the upper limit thereof may be any of the above-mentioned upper limit value, and the lower limit thereof may be any of the above-mentioned lower limit value.

On the other hand, illustrative examples of the reinforcing fibers not in the discontinuous form include a sheet substrate, a woven substrate, and a non-crimp substrate, in which the reinforcing fibers are orientated in one direction. In these forms, the reinforcing fibers are disposed regularly and densely, resulting in a decrease in the voids in the continuous porous body; and thus, impregnation of the matrix resin thereto is very difficult, thereby occasionally causing formation of a non-impregnated portion as well as significant restriction in choice of the impregnation method and of the resin type. Here, taking advantage of the densely disposed reinforcing fibers, in view of enhancement in the waterproof property of the molded article, a combination with the reinforcing fibers not in the discontinuous form as described above may be used.

The reinforcing fiber may be any in the form of a continuous reinforcing fiber having substantially the same length as the continuous porous body, or in the form of a discontinuous reinforcing fiber having been cut to a prescribed, limited length. In view of easy impregnation of the matrix resin and easy adjustment of the amount thereof, the discontinuous reinforcing fiber is preferable.

In the continuous porous body of the present invention, the mass-average fiber length of the reinforcing fibers is preferably in the range of 1 mm or more and 15 mm or less. In such a case, the reinforcing efficiency of the reinforcing fiber can be enhanced so that the continuous porous body can be provided with excellent mechanical characteristics. When the mass-average fiber length of the reinforcing fibers is 1 mm or more, the void in the continuous porous body can be formed so efficiently that the density can be lowered. In other words, the continuous porous body with lightweightness can be obtained even if the thickness thereof is the same; and thus, this is preferable. On the other hand, when the mass-average fiber length of the reinforcing fibers is 15 mm or less, the reinforcing fiber in the continuous porous body is difficult to be bent by its own weight so that expression of the mechanical characteristics is not impaired; and thus, this is preferable. The mass-average fiber length can be calculated as follows. Namely, after the matrix resin component in the continuous porous body is removed with a method such as burning and elution, 400 fibers are randomly selected from the remaining reinforcing fibers; and then, the lengths thereof are measured to the unit of 10 $\mu$m. From these values, the mass-average fiber length can be calculated.

In view of easy impregnation of the matrix resin into the reinforcing fibers, the reinforcing fiber is preferably in the form of a nonwoven fabric. The reinforcing fiber in the form of a nonwoven fabric is preferable also because of not only easy handling of the nonwoven fabric itself but also easy impregnation even in the case of a thermoplastic resin, which is generally considered to be highly viscous. Here, the form of the nonwoven fabric means the form in which strands and/or monofilaments of the reinforcing fibers are irregularly dispersed in plane directions. Illustrative examples thereof include a chopped strand mat, a continuance strand mat, a paper-made mat, a carding mat, and an air-laid mat (hereinafter, these are collectively called a reinforcing fiber mat).

In the continuous porous body of the present invention, the matrix resin may be, for example, a thermoplastic resin and a thermosetting resin. In the present invention, a thermoplastic resin and a thermosetting resin may be blended as well.

In an embodiment in the continuous porous body of the present invention, it is preferable that the matrix resin include at least one or more thermoplastic resins. Illustrative examples of the thermoplastic resin include: crystalline resins [for example, polyesters such as polyethylene terephthalate (PET), polybutylene terephthalate (PBT), polytrimethylene terephthalate (PTT), polyethylene naphthalate (PEN), and liquid crystal polyester; polyolefins such as polyethylene (PE), polypropylene (PP), and polybutylene; polyoxymethylene (POM); polyamide (PA); polyarylene sulfides such as polyphenylene sulfide (PPS); polyketone (PK); polyether ketone (PEK); polyether ether ketone (PEEK); polyether ketone (PEKK); polyether nitrile (PEN); fluorine-containing resins such as polytetrafluoroethylene; and liquid crystal polymers (LCP)]; amorphous resins [for example, in addition to styrenic resins, polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR)]; and other resins such as a phenol type, a phenoxy, a polystyrene type, a polyolefin type, a polyurethane type, a polyester type, a polyamide type, a polybutadiene type, a polyisoprene type, and fluorine type resins; and thermoplastic elastomers such as an acrylonitrile type resin, as well as thermoplastic resins selected from copolymers of these resins and modified resins thereof. Of these, in view of lightweightness of the continuous porous body to be obtained, polyolefins are preferable; in view of strength, polyamides are preferable; in view of surface appearance, amorphous resins such as polycarbonate and styrenic resins are preferable; in view of heat resistance, polyarylene sulfides are preferable; in view of continuous use temperature, polyether ether ketones are preferable; and in view of chemical resistance, fluorine type resins are preferably used.

In an embodiment in the continuous porous body of the present invention, it is preferable that the matrix resin include at least one or more thermosetting resins. Illustrative examples of the thermosetting resin include unsaturated polyesters, vinyl esters, epoxy resins, phenol resins, urea resins, melamine resins, thermosetting polyimides, copolymers of these resins, modified resins of them, as well as a blend of at least two or more of them.

The continuous porous body of the present invention may contain, as one ingredient of the matrix resin, a shock resistance enhancer such as an elastomer or a rubber ingredient, as well as other filling material and additives so far as they do not impair the object of the present invention. Illustrative examples of the filling material and the additive include an inorganic filling material, a flame retardant, a conductivity affording agent, a nucleating agent, a UV absorber, an antioxidant, a vibration damping material, an antibacterial agent, an insecticide, a deodorant, an anti-coloring agent, a heat stabilizer, a releasing agent, an antistatic agent, a plasticizer, a lubricant, a coloring material, a pigment, a dye, a blowing agent, an antifoaming agent, and a coupling agent.

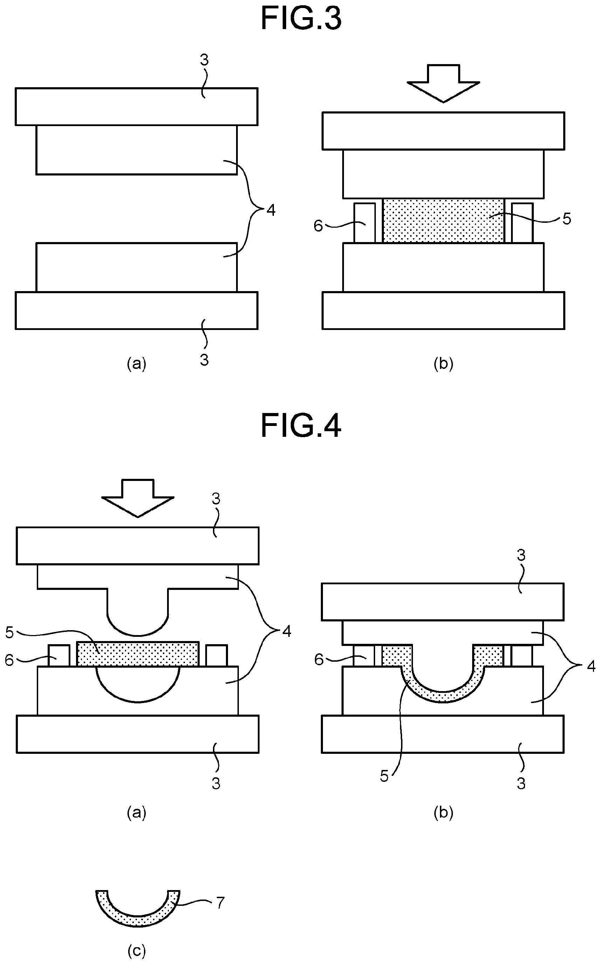

The continuous porous body of the present invention has a void. The void in the present invention means a space formed by overlapping or crossing of pillar-like supporting bodies, which are formed of the reinforcing fibers covered with the matrix resin. For example, in the case that the continuous porous body is obtained by heating the precursor of the continuous porous body, the precursor having been impregnated with the matrix resin in advance, the reinforcing fibers are raised up by melting or softening of the matrix resin due to heating thereby forming the void. This takes place because of the property that the reinforcing fibers, which are in the compressed state in the precursor of the porous body due to a pressure, are raised up due to the elastic modulus thereof. The void is continuous at least in a thickness direction. Here, the term "thickness direction" means a direction from a flat portion (surface having the largest projected area) in the flat molded article formed by a mold such as the one that is illustrated in FIG. 3 toward the surface facing this portion; and the void is continuous in this direction. In the case that the molded article is provided with a hemispherical shape formed by a mold such as the one that is illustrated by FIG. 4, the term "thickness direction" means a thickness direction of the member that constitutes the molded article. When the void is continuous in the thickness direction, the continuous porous body is air-permeable. The void may also be continuous in the direction perpendicular to the thickness direction, depending on the purpose thereof.

In the continuous porous body of the present invention, it is preferable that the content rate by volume (%) of the reinforcing fiber be in the range of 0.5 to 55% by volume, that the content rate by volume (%) of the matrix resin be in the range of 2.5 to 85% by volume, and that the content rate by volume (%) of the void be in the range of 10 to 97% by volume.

When the content rate by volume of the reinforcing fiber in the continuous porous body is 0.5% or more by volume, the reinforcing effect derived from the reinforcing fiber can be made sufficient; and thus, this is preferable. On the other hand, when the content rate by volume of the reinforcing fiber is 55% or less by volume, the content rate by volume of the matrix resin relative to the reinforcing fiber increases so that the reinforcing fibers in the continuous porous body are firmly bound with each other, resulting in the sufficient reinforcing effect of the reinforcing fiber. Accordingly, the mechanical characteristics of the continuous porous body, especially a bending characteristic thereof, can be satisfied; and thus, this is preferable.

When the content rate by volume of the matrix resin is 2.5% or more by volume in the continuous porous body, the reinforcing fibers in the continuous porous body can be firmly bound with each other so that the reinforcing effect of the reinforcing fiber can be made sufficient. Accordingly, the mechanical characteristics of the continuous porous body, especially a bending characteristic thereof, can be satisfied; and thus, this is preferable. On the other hand, when the content rate by volume of the matrix resin is 85% or less by volume, formation of void is not disturbed; and thus, this is preferable.

In the continuous porous body, the reinforcing fiber is covered with the matrix resin, in which thickness of the covering matrix resin (cover thickness) is preferably in the range of 1 $\mu$m or more and 15 $\mu$m or less. In view of shape stability of the continuous porous body and an easiness and a freedom in the thickness control, the covering state of the reinforcing fiber covered with the matrix resin is satisfactory so far as the point at which the single fibers of the reinforcing fibers that constitute the continuous porous body are crossing with each other is covered therewith. A more preferable embodiment is the state that the matrix resin covers around the reinforcing fiber with the above-mentioned thickness. In this state, the surface of the reinforcing fiber is not exposed because of the matrix resin. In other words, this means that the reinforcing fiber has a film formed with the matrix resin, similarly to an electric wire. Through this, the continuous porous body can have the further enhanced shape stability and ensures expression of the mechanical characteristics. With regard to the covering state of the reinforcing fiber covered with the matrix resin, the reinforcing fiber does not need to be entirely covered; and thus, the state is satisfactory so far as the shape stability, the flexural modulus, and the bending strength of the continuous porous body of the present invention are not impaired.

In the continuous porous body, the content rate by volume of the void is preferably in the range of 10% by volume or more and 97% by volume or less. When the content rate of the void is 10% or more by volume, the density of the continuous porous body is low and the lightweightness thereof can be satisfied; and thus, this is preferable. On the other hand, when the content rate of the void( is 97% or less by volume, this means that the thickness of the matrix resin covering around the reinforcing fiber is sufficient, so that the reinforcing fibers in the continuous porous body can be sufficiently reinforced with each other thereby enhancing the mechanical characteristics; and thus, this is preferable. The upper limit value of the content rate by volume of the void is preferably 97% by volume. In the present invention, total of the content rates by volume of the reinforcing fiber, the matrix resin, and the void, these being the components that constitute the continuous porous body, is taken as 100% by volume.

In the continuous porous body, the void is formed by a restoring force to resume an original state, the restoring force being generated due to rise of the reinforcing fibers caused by lowering of a viscosity of the matrix resin in the precursor of the continuous porous body. Through this, the reinforcing fibers are bound with each other via the matrix resin thereby expressing a firmer compression characteristic and a shape retentive property of the continuous porous body; and thus, this is preferable.

The density $\rho$ of the continuous porous body is preferably 0.9 g/cm$^3$ or less. When the density $\rho$ of the continuous porous body is 0.9 g/cm$^3$ or less, this means that the mass of the continuous porous body is lowered, thereby contributing to reduction in the mass of the product to be obtained; and thus, this is preferable. The density is more preferably 0.7 g/cm$^3$ or less, while still more preferably 0.5 g/cm$^3$ or less. Although there is no restriction as to the lower limit of the density, in the continuous porous body having the reinforcing fiber and the matrix resin, in general, the lower limit can be the value calculated from the volume ratios of the reinforcing fiber, the matrix resin, and the void, which are the constituting components thereof. In view of retaining the mechanical characteristics of the continuous porous body, the density of the continuous porous body itself in the molded article of the present invention is preferably 0.03 g/cm$^3$ or more, although this value is different depending on the reinforcing fiber and the matrix resin to be used.

Thin Film Layer

In the molded article of the present invention, the thin film layer is a layer having at least a waterproof property. Here, the layer having a waterproof property means a layer having a function capable of preventing permeation of a liquid; and thus, when the thin film layer is formed as an outer surface of the molded article as a final product, penetration of a liquid into the continuous porous body can be prevented; and when this is formed as an inner surface thereof, this can provide a role to store a liquid that is penetrated into the continuous porous body without letting it permeate. In the present invention, in view of enhancement in the waterproof property furthermore, it is preferable that the thin film layer be composed of two or more layers. The composition like this can reduce amounts of a solid additive and of a resin to be used for formation of the thin film layer, so that the molded article that is excellent in lightweightness can be obtained.

In the molded article of the present invention, the thin film layer has a solid additive and a resin. In view of expression of the function due to the solid additive, a mixing rate of the solid additive to the resin is preferably in the range of 0.1% by volume or more and 50% by volume or less. When the volume rate of the solid additive is less than 0.1% by volume, there is a risk that expression of the function due to the solid additive is insufficient; when the volume rate is more than 50% by volume, the weight of the molded article increases. In addition, at the time of shaping the thin film layer, the viscosity of the resin increases thereby leading to deterioration in the handling property thereof. The mixing rate of the solid additive in the thin film layer is more preferably in the range of 1% by volume or more and 40% by volume or less, while still more preferably in the range of 3% by volume or more and 30% by volume or less.

Considering that the molded article of the present invention is treated also as a final product, it is preferable that the thin film layer be a layer also provided with designability. From this viewpoint, the solid additive is added with an aim to provide the molded article with designability including a color, a pearl-like feeling, and a metallic feeling, in addition to the aim to prevent a liquid from penetrating into the void in the continuous porous body.

Illustrative examples of the solid additive include a pigment and a glass bead. Specific examples thereof are: organic pigments such as an azo pigment and a phthalocyanine blue; metal pigments formed of metal powders such as powders of aluminum and brass; and inorganic pigments such as chromium oxide and cobalt blue. Of these, in view of a heat resistance, metal pigments and inorganic pigments are preferable. When the reinforcing fiber has a dark color such as colors of a carbon fiber and an aramid fiber, the pigment having two or more layers that have structures with different refractive indexes are preferably used. Illustrative examples thereof include natural mica, artificial mica, alumina flake, silica flake, and glass flake, all being covered with titanium oxide or iron oxide. The layer structure like this can develop a color by an optical phenomenon such as interference, diffraction, or scattering of a light in a visible light region. Utilization of the optical phenomenon such as interference, diffraction, or scattering can develop a color by reflection of a light having a specific wavelength; and thus, they are preferably used when the reinforcing fiber having a deep color is used. In view of blocking the void in the continuous porous body (hole in the case of the surface of the continuous porous body), the solid additive is preferably in the incompatible state with the resin at the time of forming the thin film layer, and there is no restriction as to the state thereof after the thin film layer is formed.

The shape of the solid additive is not particularly restricted; the shape thereof may be of sphere-like, fiber-like, or flake-like. In the present invention, to block the void that is continuous in the thickness direction of the continuous porous body is one purpose of the addition of the solid additive, so that the shape may be chosen as appropriate in accordance with the shape of the void. The maximum size of the solid additive is preferably 200 $\mu$m or less. Here, the maximum size of the solid additive means the largest size of the primary particles of the solid additive or the largest size of the secondary particles thereof when the solid additive undergoes agglomeration or the like. When the maximum size of the solid additive is 200 $\mu$m or less, the surface of the thin film layer is flat and smooth, so that designability thereof can be enhanced. The maximum size of the solid additive is preferably 1 $\mu$m or more. When the maximum size of the solid additive is 1 $\mu$m or more, the waterproof property of the thin film layer can be enhanced. In addition, the relation between the maximum size of the solid additive and the void diameter (hole diameter) of the continuous porous body to be described later is preferably [void diameter (hole diameter) of the continuous porous body $\leq$ maximum size of the solid additive], and the relation is more preferably [void diameter (hole diameter) of the continuous porous body $\times$ 1.1 < maximum size of the solid additive], while the relation is still more preferably [void diameter (hole diameter) of the continuous porous body $\times$ 1.3 < maximum size of the solid additive]. The maximum size of the solid additive can be obtained by observing the solid additive by means of an electron microscope as follows. Arbitrary 100 solid additives are randomly selected in the picture that is enlarged such that the size thereof may be measured to the unit of at least 1 $\mu$m; and a maximum distance between arbitrarily selected two points on the outer circumference line of each solid additive is measured. The maximum size is the average value of these maximum lengths measured. Although the aspect ratio of the solid additive is not particularly restricted, the ratio is preferably 50 or less, while more preferably 30 or less. In view of easiness in formation of the thin film layer (handling property of the resin composition), the aspect ratio is still more preferably 5 or less. The nearer the aspect ratio of the additive is to 1, the more the fluctuation in the characteristics of the thin film layer can be suppressed. On the other hand, when the hole formed in the continuous porous body is large, the aspect ratio of 10 or more is preferable in view of thinning of the thin film layer.

The maximum size of the solid additive is more preferably 150 $\mu$m or less, while still more preferably 100 $\mu$m or less. Also, the maximum size of the solid additive is more preferably 5 $\mu$m or more, while still more preferably 10 $\mu$m or more.

In view of suppressing a mass increase of the thin film layer and of the molded article, it is preferable that the solid additive having a hollow structure, which means inside of the solid additive is hollow, be used. In particular, in view of a mass reduction, a hollow glass bead, a porous resin particle, and the like are preferable. Alternatively, the hollow structures such as a donut-like, a triangle-like, and a frame-like structure may be used as well. When the solid additive as mentioned above is used, an increase in the weight may be suppressed while keeping the maximum size of the solid additive that plays a role to cover the void, which is continuous in the thickness direction of the continuous porous body.

In the thin film layer of the present invention, a thermosetting resin or a thermoplastic resin may be used as the resin thereof.

In the thin film layer of the present invention, the thermosetting resin includes a thermosetting resin and a curing agent. There is no particular restriction as to the thermosetting resin. Any arbitrary thermosetting resin such as an epoxy resin, an unsaturated polyester, and a phenol resin may be used. The thermosetting resin may be used singly, or they may be blended as appropriate. When the solid additive providing designability is used, an epoxy resin and an unsaturated polyester, these having a high transparency, are preferably used.

With regard to the curing agent, there are compounds undergoing a stoichiometric reaction, such as an aliphatic polyamine, an aromatic polyamine, dicyandiamide, a polycarboxylic acid, a polycarboxylic acid hydrazide, an acid anhydride, a polymercaptan, and a polyphenol; and compounds acting as a catalyst such as an imidazole, a Lewis acid complex, and an onium salt. When the compound undergoing a stoichiometric reaction is used, occasionally, a curing facilitator such as an imidazole, a Lewis acid complex, an onium salt, a urea derivative, or a phosphine is further blended with it. Of these curing agents, an organic nitrogen compound having, in the molecule thereof, a nitrogen-containing group such as an amino group, an amide group, an imidazole group, a urea group, or a hydrazide group, may be preferably used, because a fiber-reinforced composite material to be obtained with them are excellent in heat stability and mechanical characteristics. The curing agent may be used singly or as a combination of these agents.

In the thin film layer of the present invention, a viscosity of the thermosetting resin at 23°C is preferably in the range of $1\times10^1$ or more and $1\times10^4$ Pa·s or less. When the viscosity of the resin at 23°C is $1\times10^1$ or more, penetration of the resin into the continuous porous body can be suppressed. When the viscosity of the thermosetting resin is $1\times10^4$ Pa·s or less, application thereof to the porous body can be readily carried out, so that the thin film layer having a uniform thickness can be formed. The viscosity of the thermosetting resin at 23°C is more preferably in the range of $1\times10^2$ or more and $5\times10^3$ Pa·s or less.

In the thin film layer of the present invention, a viscosity of the thermosetting resin upon heating at 50°C for 30 minutes is preferably $1\times10^4$ Pa·s or more. It is preferable that the thermosetting resin be cured immediately after application thereof to the continuous porous body in order not to excessively penetrate into the void of the continuous porous body. When the viscosity of the thermosetting resin upon heating at 50°C for 30 minutes is $1\times10^4$ Pa·s or more, penetration of the thermosetting resin into the continuous porous body can be suppressed. This viscosity is more preferably $1\times10^5$ Pa·s or more.

In the thin film layer of the present invention, there is no particular restriction as to the thermoplastic resin. An arbitrary thermoplastic resin such as an acryl resin, a urethane resin, a polyamide resin, a polyimide resin, and a vinyl chloride resin may be used. The thermoplastic resin may be used singly, or they may be blended as appropriate. The thermoplastic resin may be selected in the same way as the resin that constitutes the continuous porous body.

When the thin film layer uses a pigment as the solid additive and has a thermosetting resin, a difference in refractive indexes between the pigment and the cured product of the thermosetting resin is preferably 0.1 or less. The smaller the difference in the refractive indexes is, the higher the transparency of the thin film layer is, thereby leading to enhancement in expression of the coloring effect of the pigment. The resin to be used in the thin film layer is preferably a thermosetting resin.

Molded Article

In the molded article of the present invention, a permeation rate of water from the surface of the molded article on the side of the thin film layer is 10% or less. When the permeation rate of water is 10% or less, permeation of water into the continuous porous body can be prevented. The permeation rate of water is preferably 8% or less, while more preferably 5% or less. The permeation rate of water into the molded article can be obtained, for example, as follows. A specimen with the size of 100 mm $\times$ 100 mm is cut out from the molded article; and the mass M0 thereof is measured. Then, 30 g of water is dropped onto the surface of the specimen on the side of the thin film layer. After 5 minutes, the specimen is turned over; and after the water remaining on the surface of the specimen is removed, the mass of the specimen M1 is measured. The permeation rate of water can be calculated from the following equation.

$$\texttt{Permeation rate [\%] = \{(M1 - M0) \div 30\} \times 100 \quad Equation (1)}$$

In the molded article of the resent invention, a thickness of the thin film layer is preferably in the range of 10 μm or more and 500 μm or less). When the thickness is less than 10 μm, there is a risk of deterioration in the waterproof property. When the thickness is more than 500 μm, a flat and smooth surface or a surface having excellent designability can be formed, but a mass of the molded article increases, so that expression of the lightweightness of the molded article becomes difficult. The thickness of the thin film layer is more preferably 400 μm or less, while still more preferably 300 μm or less.

In the molded article of the present invention, a density of the thin film layer is preferably 2.5 g/cm$^3$ or less. When the density of the thin film layer is 2.5 /cm$^3$ or less, an increase in the mass of the molded article can be suppressed. The density of the thin film layer is 2.5 g/cm$^3$ or less, and more preferably 2.0 g/cm$^3$ or less, while still more preferably 1.5 g/cm$^3$ or less. In view of the mass reduction, a lower limit value of the density of the thin film layer is not particularly restricted, but in view of easiness in formation of the thin film layer, the density is 0.1 g/cm$^3$ or more, and more preferably 0.3 g/cm$^3$ or more, while still more preferably 0.5 g/cm$^3$ or more. In the molded article of the present invention, it is preferable that the thin film layer penetrate into the void in the continuous porous body. When the thin film layer penetrates into the void, a mechanical bonding by anchoring is formed, so that the thin film layer that is firmly bound to the surface of the continuous porous body can be formed. In addition, in the molded article of the present invention, it is preferable that at least part of the solid additive be present in the void of the continuous porous body. The state as described above can further prevent water and an aqueous solution from penetrating into the continuous porous body. In addition, an excessive penetration of the resin that constitutes the thin film layer can be suppressed. Although the state how the solid additive is present in the void in the continuous porous body at this time is not particularly restricted, it is preferable that the solid additive having entered into the continuous porous body be present at the position with the depth of 30 μm or more in the thickness direction of the porous body. The depth is more preferably 50 μm or more, while still more preferably 100 μm or more.

The molded article according to a second embodiment of the present invention is a molded article having a continuous porous body provided with a thin film layer, the continuous porous body having a void that is continuous in a thickness direction thereof, and the thin film layer having a solid additive and a resin; and a permeation rate of a solution from a surface of the molded article on the side of the thin film layer is 30% or less, a contact angle of the solution on a glass substrate being 60° or less, which is measured in accordance with JIS R3257 (1999). When the permeation rate of a solution whose contact angle on a glass substrate is 60° or less, which is measured in accordance with JIS R3257 (1999), from a surface of the molded article on the side of the thin film layer is 30% or less, even in the case when the molded article is treated with a solution containing a surfactant added with an aim for cleaning or the like (so-called shampoo solution), the shampoo solution can be prevented from permeating into the continuous porous body. The permeation rate of a solution whose contact angle on a glass substrate is 60° or less, which is measured in accordance with JIS R3257 (1999), from a surface of the molded article on the side of the thin film layer is more preferably 20% or less, while still more preferably 10% or less. The contact angle of the solution whose permeation rate is 30% or less is more preferably 45° or less, while still more preferably 30° or less. The permeation rate of the solution whose contact angle on a glass substrate is 60° or less, which is measured in accordance with JIS R3257 (1999), from a surface of the molded article of the side of the thin film layer can be measured in the same way as the measurement of the permeation rate of water described before. The shampoo solution may be a solution to be used for washing of a car, cleaning of clothes, washing of dishes, or the like, i.e., a solution that contains a surfactant as a main component. There is no particular restriction as to the surfactant; the hydrophilic portion thereof may be an ionic or a nonionic. With regard to the ionic surfactant, there are an anionic surfactant, a cationic surfactant, and an amphoteric surfactant. In view of removing (cleaning) dirt such as oily dirt, a solution containing an anionic surfactant is a main stream. These surfactants may be used as they are or as the solutions diluted with water or the like. In the molded article according to the second embodiment, the porous body, the thin film layer, and the molded article are the same as those according to the first embodiment.

Production of the Continuous Porous Body

The methods for producing the precursor of the continuous porous body and of the continuous porous body will be described.

An illustrative example of the method for producing the precursor may be a method in which a matrix resin that is in a molten or a softened state is pressed to or evacuated with a reinforcing fiber mat. Specifically, in view of easy production thereof, a preferable example thereof is a method in which a piled substance having the matrix resin disposed on both sides of the reinforcing fiber mat in a thickness direction and/or on a center thereof is heated and pressed so as to impregnate in the molten state thereof.

For example, the reinforcing fiber mat that constitutes the continuous porous body may be produced by a method in which the reinforcing fibers are previously dispersed into the state of a strand and/or in the substantially monofilament-like state to produce the reinforcing fiber mat. Heretofore known methods for producing the reinforcing fiber mat are: a dry process such as an air-laid method in which the reinforcing fibers are made into a dispersed sheet in an air stream and a carding method in which the reinforcing fibers are mechanically combed with shaping thereby forming a sheet, as well as a wet process with a Radright method in which the reinforcing fibers are stirred in water for papermaking. With regard to the method with which the reinforcing fiber approaches more to a monofilament-like state, illustrative examples of the dry process include a method in which a fiber-opening bar is installed, a method in which a fiber-opening bar is additionally vibrated, a method in which clearance of the card is made finer, and a method in which rotation speed of the card is adjusted. Illustrative examples of the wet process include a method in which stirring conditions of the reinforcing fiber are controlled, a method in which concentration of the reinforcing fiber in the dispersion solution is diluted, a method in which viscosity of the dispersion solution is controlled, and a method in which a vortex at the time of transporting the dispersion solution is suppressed. In particular, it is preferable that the reinforcing fiber mat be produced with a wet process, in which the ratio of the reinforcing fiber in the reinforcing fiber mat can be readily controlled by increasing the concentration of the charged fiber, or by controlling flow rate (flow amount) of the dispersion solution and the speed of a mesh conveyer, or the like. For example, when the speed of the mesh conveyer is slowed relative to the flow rate of the dispersion solution, the fibers in the reinforcing fiber mat to be obtained are not readily orientated toward a pulling direction so that a bulky reinforcing fiber mat can be produced. The reinforcing fiber mat may be composed of the reinforcing fiber single body, or a mixture of the reinforcing fiber with a matrix resin component in the form of powder or fiber, or a mixture of the reinforcing fiber with an organic compound or an inorganic compound, or the reinforcing fibers may be filled among themselves with the matrix resin component.

In order to realize the methods described above, a compression molding machine or double belt press equipment may be suitably used. A batch type method is carried out with the former equipment; in this method, the productivity thereof can be increased by employing an intermittent press system in which 2 or more pieces of equipment for heating and cooling are arranged in parallel. A continuous type method is carried out with the latter equipment, in which continuous processing can be readily carried out so that this method is superior in the continuous productivity.

Next, with regard to the process at which the precursor is expanded and molded to the continuous porous body, although there is no particular restriction, it is preferable that the precursor be molded to the continuous porous body by lowering the viscosity of the matrix resin that constitutes the continuous porous body. A preferable method for lowering the viscosity of the matrix resin is to heat the precursor. There is no particular restriction as to the heating method. The heating may be carried out by contacting with a mold or a hot plate whose temperature is set at an intended temperature or by a non-contacting heating by means of a heater or the like. In the case that a thermoplastic resin is used as the matrix resin that constitutes the continuous porous body, heating may be carried out at the temperature of the melting point or the softening point thereof or higher; in the case that a thermosetting resin is used, heating is carried out at the temperature lower than the temperature at which a curing reaction thereof initiates.

Although there is no restriction as to the method for controlling the thickness of the continuous porous body so far as the precursor to be heated can be controlled within a target thickness, preferable examples thereof in view of convenience in the production thereof include a method in which the thickness is restricted by using a metal plate or the like and a method in which the thickness is controlled by pressure applied to the precursor. A compression molding machine or a double belt press machine may be preferably used as the equipment for achieving these methods described above. A batch type method is carried out with the former equipment; in this type, the productivity thereof can be increased by employing an intermittent press system in which 2 or more pieces of equipment for heating and cooling are arranged in parallel. A continuous type method is carried out with the latter equipment, in which continuous processing can be readily carried out so that this method is superior in the continuous productivity.

Production of the Molded Article

In the molded article according to the present invention, it is preferable that the thin film layer be formed by heating after a resin mixture of the resin and the solid additive is applied onto the continuous porous body. It is also possible to form the thin film layer without heating, but in view of productivity and because an excessive penetration of the thin film layer into the continuous porous body can be suppressed, it is preferable to form the thin film layer by heating.

The resin mixture of the resin and the solid additive may be produced by means of an agitator or an extruder.

The resin mixture may be applied to the continuous porous body by means of a brush, a roller, a blade coater, an air knife, a die coater, a meniscus coater, a bar coater, or the like. Alternatively, the application of the resin mixture can be carried out by blowing the resin mixture to form the thin film layer by means of compressed air. At this time, although the way how to blow is not particularly restricted, in view of suppressing an excessive penetration into the void in the continuous porous body, it is preferable to apply the resin mixture with a pressure lower than the pressure P that is obtained upon measurement of a void diameter (hole diameter) in the continuous porous body (this will be described later).

The continuous porous body having the resin mixture applied thereto is heated. In the case of using a thermosetting resin, the heating temperature may be equal to or higher than a curing temperature thereof; and in the case of using a thermoplastic resin, the heating temperature may be equal to or higher than a melting point or a softening temperature thereof.

When a thermoplastic resin is used as the resin to constitute the thin film layer, the application thereof may be done by an insert molding after the continuous porous body is set in a mold for injection molding.

The molded article of the present invention produced in the way as described above can be used variously. Illustrative examples of the preferable use thereof include: parts for electric and electronic equipment [for example, a personal computer, a display, OA equipment, a mobile phone, a portable data assistant, a PDA (portable data assistant such as an electronic diary), a video camera, optical equipment, audio equipment, an air conditioner, illuminating equipment, an entertainment good, a toy good, a housing of other home electric products, a tray, a chassis, an interior component, a vibration board, a speaker corn, and the case thereof]; sound components [for example, a speaker corn]; outer plates or body parts [for example, various members, various frames, various hinges, various arms, various axles, various car bearings, and various beams], [a hood, a roof, a door, a fender, a trunk lid, a side panel, a rear end panel, a front body, an underbody, various pillars, various members, various frames, various beams, various supports, various rails, and various hinges]; outer parts [for example, a bumper, a bumper beam, molding, an undercover, an engine cover, a straightening plate, a spoiler, a cowl louver, and an aero part]; interior parts [for example, an instrument panel, a seat frame, a door trim, a pillar trim, a handle, and various modules]; structural parts for automobiles and bicycles [for example, a motor part, a CNG tank, and a gasoline tank]; parts for automobile and two-wheel vehicles [for example, a battery tray, a head lamp support, a pedal housing, a protector, a lamp reflector, a lamp housing, a noise shield, and a spare tire cover]; construction materials [wall inner members such as a sound shielding wall and a sound protection wall]; and aircraft parts [for example, a landing gear pod, a winglet, a spoiler, an edge, a ladder, an elevator, a fairing, a rib, and a seat]. In view of mechanical characteristics and shaping properties, the molded product is preferably used for automobile interior and exterior armor, housings for electric and electronic equipment, bicycles, structural materials for sporting goods, interior materials for aircrafts, boxes for transportation, and construction materials. In the case when a waterproof surface of the molded article of the present invention is used as an inner surface, this may also be used as a water-absorbing sponge (floral foam) for a factory to grow a plant or the like, or on a surface and/or the inside of asphalt as a waterproof pavement. Examples

Hereinafter, the present invention will be further described in detail by Examples.

(1) Permeation Rate of Water and of Solution in the Molded Article

A specimen with the size of 100 mm × 100 mm was cut out from the molded article; and the mass M0 thereof was measured. Then, 30 g of water or a solution was prepared, and dropped onto the surface of the specimen on the side of the thin film layer. After 5 minutes, the specimen was turned over; and after the water or the solution remaining on the surface of the specimen was removed, the mass of the specimen M1 was measured again. The permeation rate thereof was calculated from the following equation. Permeation rate [%] = {(M1 - M0) ÷ 30} × 100 Equation (1)

(2) Contact Angle of Solution

With referring to the sessile drop method in the wetting property test method of a surface of a glass substrate in JIS R3257 (1999), the contact angle of each solution to be used in the permeation rate was measured. The shape of a water droplet is photographed from the side thereof to measure the height h and the radius r. From the obtained values and the following equation, the contact angle thereof was calculated. As a shampoo solution used, a solution containing an anionic surfactant for car washing was diluted with water.

$$\text{Contact Angle } \theta \ [°] = 2\text{Tan}{-}1(h/r) \quad \text{Equation (2)}$$

(3) Thickness of the Thin Film Layer

A specimen with a vertical side of 10 mm and a horizontal side of 10 mm was cut out from the molded article. This was buried into an epoxy resin, and then a sample was obtained by polishing this in such a way that the section thereof perpendicular to the thickness direction of the molded article might become the surface for observation. The thickness of the thin film layer in the sample was measured by using a laser microscope (VK-9510: manufactured by Keyence Corp.). At 10 positions with the same interval from the edge in the direction perpendicular to the thickness direction of the specimen, the position of the side of the porous body from the surface of the thin film layer was measured. The thickness of the thin film layer was obtained as an arithmetic average value from the thicknesses of total 50 positions of the thin film layer, obtained from 5 specimens and 10 positions in each specimen.

(4) Density ps of the Thin Film Layer

A resin mixture to be used for formation of the thin film layer, obtained by mixing a solid additive with a resin at a prescribed ratio, was applied onto a releasable film so as to give the thickness of 1 mm, and then, this was cured or solidified. From the thin film layer having a plate-like shape thus obtained, a specimen having the size of 25 mm $\times$ 25 mm was cut out. From the mass and the volume thereof, the density ps of the thin film layer was calculated.

(5) Maximum Size of the Solid Additive in the Thin Film Layer

The shape of the solid additive was measured by using a laser microscope. The maximum size of the solid additive was measured as it was when only the solid additive was available. In the case that the solid additive was mixed with a resin and so forth, the maximum size thereof was measured after the resin component was burnt out by heating at 500°C in an air atmosphere for 30 minutes.

(6) Viscosity of the Resin Constituting the Thin Film Layer

A viscosity of the resin at 23°C was measured with referring to JIS K7244 (2005), Plastics - Determination of dynamic mechanical properties - Part 10: Complex shear viscosity using a parallel-plate oscillatory rheometer. In a dynamic viscoelasticity meter (manufactured by TA Instruments Inc.), flat parallel plates having the diameter of 40 mm were used as a measurement jig, and the resin was disposed between the plates with the distance of 1 mm to each other. The measurement was done with a twist mode (measurement frequency: 0.5 Hz).

(7) Viscosity of the Resin Constituting the Thin Film Layer after Having Been Heated at 50°C for 30 Minutes

After the resin was disposed in the dynamic viscoelasticity meter used in (6), the temperature thereof was raised to 50°C; then, kept in this state for 30 minutes. Then, the viscosity thereof was measured in the same way as (6).

(8) Content Rate by Volume Vf of the Reinforcing Fiber in the Continuous Porous Body

A specimen was cut out from the continuous porous body. After the mass Ws thereof was measured, the specimen was heated at 500°C in an air atmosphere for 30 minutes to burn out the resin component. The remaining mass Wf of the reinforcing fiber was measured; and the calculation was done by the following equation.

$$\mathrm{Vf} \ (\% \ \text{by volume}) = (\mathrm{Wf}/\rho f)/\{\mathrm{Wf}/\rho f + (\mathrm{Ws}-\mathrm{Wf})/\rho r\} \times 100$$

pf: Density of the reinforcing fiber (g/cm$^3$)
pr: Density of the matrix resin (g/cm$^3$)

(9) Density ρp of the Continuous Porous Body

A specimen was cut out from the continuous porous body; and an apparent density of the continuous porous body was measured with referring to JIS K7222 (2005). The size of the specimen was 100 mm as a vertical side and 100 mm as a horizontal side. The vertical side, the horizontal side, and the thickness of the specimen were measured with a micrometer; and from the measured values, the volume V of the specimen was calculated. The mass M of the cut-out specimen was measured with an electronic balance. By substituting the obtained mass M and volume V in the following equation, the density ρp of the continuous porous body (A) was calculated.

$$\rho p \ [\mathrm{g/cm}^3] = \mathrm{M[g]}/\mathrm{V[cm}^3]$$

(10) Density ρm of the Molded Article

A portion including the continuous porous body and the thin film layer was cut out from the molded article as a specimen, and an apparent density of the molded article was measured in the same way as (9) Density ρp of the Continuous Porous Body; and then, the density ρm was calculated.

(11) Content Rate by Volume of the Void in the Continuous Porous Body

A specimen with a vertical side of 10 mm and a horizontal side of 10 mm was cut out from the continuous porous body, and the section thereof was observed with a scanning electron microscope (SEM) (S-4800 Type: manufactured by Hitachi High-Technologies Corp.); and then, 10 portions from the surface of the continuous porous body at regular intervals were photographed with a magnification of 1,000. In each of these pictures, the area Aa of the void in the picture was obtained; and then, the void rate was calculated by dividing the area Aa of the void with the total area in the picture. The content rate by volume of the void in the continuous porous body was obtained as an arithmetic average value from the void rates of total 50 portions, obtained from 5 specimens and 10 portions in each specimen.

(12) Air Permeability of the Continuous Porous Body (Air Permeability in the Thickness Direction)

The air permeability of the continuous porous body was measured in accordance with following (a) to (d). When air permeability was confirmed at 500 Pa or lower, i.e., the upper limit in the test condition based on the JIS standard, this was judged to be "air permeable"; and the other was judged to be "air impermeable".

(a) A specimen having the size of 100 mm × 100 mm with the thickness of 5 mm is cut out from the continuous porous body (when the thickness is 5 mm or less, this is used as it is; when the thickness is more than 5 mm, the thickness thereof is adjusted by cutting processing or the like).
(b) Edges of the specimen (cut surfaces) are covered with 4-surface tape (to prevent air permeation to an in-plane direction).
(c) The specimen is attached to one end of the cylinder of the test machine measurable with the JIS L1096 (2010) A method (Frazier method).
(d) The aspiration fan and the air hole are adjusted such that the pressure with an inclined manometer may be 500 Pa or less.

(13) Void Diameter (Hole Diameter) of the Continuous Porous Body

A specimen with a vertical side of 10 mm and a horizontal side of 10 mm was cut out from the continuous porous body, and the void diameter (hole diameter) of the continuous porous body was measured with mercury porosimetry in accordance with JIS R1655 (2003). The void diameter (hole diameter) of the continuous porous body can be calculated by the following equation.

$$\mathrm{d} = -4\sigma(\cos\theta)/\mathrm{P}$$

d [m]: Void diameter (hole diameter) of the continuous porous body
σ [N/m]: Surface tension of mercury
σ [°]: Contact angle of mercury on the specimen
P [Pa]: Pressure applied to mercury

(14) State Observation of the Continuous Porous Body and of the Thin Film Layer (Solid Additive)

A specimen was cut out from the specimen, and the section of the specimen was observed with a laser microscope. At this time, it was observed whether the solid additive constituting the thin film layer was present in the void of the continuous porous body.
In Examples and Comparative Examples described below, the following materials were used.

Reinforcing Fiber Mat 1

Chopped carbon fibers were obtained by cutting "Torayca" T700S-12K (manufactured by Toray Industries, Inc.) to the length of 5 mm with a cartridge cutter. A dispersion solution with the concentration of 0.1% by mass including water and a surfactant (polyoxyethylene lauryl ether (trademark): manufactured by Nakarai Tesque, Inc.) was prepared; and by using this dispersion solution and the chopped carbon fibers, a reinforcing fiber mat was produced by using the production equipment of the reinforcing fiber mat as illustrated in FIG. 2. The production equipment illustrated in FIG. 2 is provided with, as a dispersion tank, a cylindrical vessel with a diameter of 1,000 mm having in the bottom thereof an opening cock and a linear transporting part (inclination angle of 30°) connecting between the dispersion tank and a papermaking tank. A stirrer is installed in the upper opening of the dispersion tank; the chopped carbon fibers and the dispersion solution (dispersion medium) can be charged from this opening. The papermaking tank is provided in the bottom thereof with a mesh conveyer having a papermaking surface having the width of 500 mm; and a conveyer that can transport the carbon fiber substrate (paper-made substrate) is connected to the mesh conveyer. The papermaking was carried out in the dispersion solution with the carbon fiber concentration of 0.05% by mass. The paper-made carbon fiber substrate was dried in a drying oven at 200°C for 30 minutes to obtain the reinforcing fiber mat with the basis weight of 100 g/m$^2$.

PP Resin

A resin sheet with the basis weight of 100 g/m$^2$, formed of 80% by mass of an unmodified polypropylene resin ("Prime Polypro" (registered trademark) J105G: manufactured by Prime Polymer Co., Ltd.) and 20% by mass of an acid-modified polypropylene resin ("ADMER" QB510: manufactured by Mitsui Chemicals, Inc.), was prepared.

Resin 1

A mixture of 100 parts by mass of jER 828 (manufactured by Mitsubishi Chemical Corp.) as a main ingredient with 11 parts by mass of triethylene tetramine (manufactured by Tokyo Chemical Industry Co., Ltd.) as a curing agent was prepared as resin 1.

Resin 2

As the main ingredients, 85 parts by mass of jER 828 and 15 parts by mass of jER 1001 (both are manufactured by Mitsubishi Chemical Corp.) were mixed with warming at 120°C. Then, as a curing agent, 9.7 parts by mass of triethylene tetramine (manufactured by Tokyo Chemical Industry Co., Ltd.) was mixed therewith to prepare resin 2.

Resin 3

Resin 3 was prepared as pellets by melt kneading a mixture of 80% by mass of an unmodified polypropylene resin ("Prime Polypro" (registered trademark) J709QG: manufactured by Prime Polymer Co., Ltd.), 20% by mass of an acid-modified polypropylene resin ("ADMER" QB510: manufactured by Mitsui Chemicals, Inc.), and 5% by mass of a solid additive 2 to be described later.

Solid Additive 1

Glass Bubbles K20 (manufactured by 3M Company) was prepared as solid additive 1.

Solid Additive 2

Milled Fiber EFH 50-31 (manufactured by Central Glass Fiber Co., Ltd.) was prepared as solid additive 2.

Solid Additive 3

Glass flake "Metashine" 1080 (manufactured by Nippon Sheet Glass Co., Ltd.) was prepared as solid additive 3.

Precursor of the Continuous Porous Body

A piled substance was prepared in which the reinforcing fiber mat 1 as the reinforcing fiber mat and the PP resin as the resin sheet were disposed in the order of [resin sheet/reinforcing fiber mat/resin sheet/reinforcing fiber mat/reinforcing fiber mat/resin sheet/reinforcing fiber mat/resin sheet]. Next, by way of the following processes (I) to (IV), the precursor of the continuous porous body was obtained.

Process (I): The piled substance is disposed in a cavity of a mold for press molding that is preheated at 200°C; and then, the mold is closed.
Process (II): Next, a pressure of 3 MPa is applied, and then, this condition is kept for 180 seconds.
Process (III): After the process (II), the temperature of the cavity is lowered to 50°C with keeping the pressure.
Process (IV): The mold is opened, and the precursor of the continuous porous body is taken out.

By using the precursor of the continuous porous body and a press-molding mold that has a press-machine's hot plate 3 and a mold 4 and that is capable of producing a flat plate as illustrated in FIG. 3, a continuous porous body was obtained by way of the following processes (I) to (V) .

Process (I): The precursor of the continuous porous body was preheated for 60 seconds by means of an IR heater whose temperature was set at 260°C.
Process (II): After the preheating, the precursor 5 was disposed in a mold cavity for press molding whose temperature was set at 120°C. At this time, a metal spacer 6 was inserted to adjust the thickness of the continuous porous body.
Process: (III): Next, a pressure of 3 MPa was applied by means of the press-machines hot plate 3; and then, this state was kept for 60 seconds.
Process (IV): Then, the cavity temperature was lowered to 50°C with keeping the pressure.
Process (V): the mold 4 was opened, and the continuous porous body was taken out.

Example 1

Resin mixture A was prepared from 100 parts by mass of the resin 1 and 15 parts by mass of the solid additive 1, as the material for formation of the thin film layer. The resin mixture A thus obtained was applied onto the surface of the continuous porous body such that the amount thereof might become 50 g/$m^2$; and then, dried in a drying furnace whose temperature was set at 50°C for 1 hour to obtain a molded article. By using water and the solution described in Table 1, the respective permeation rates to the molded article thus obtained were measured. The results are listed in Table 1.

Example 2

A molded article was obtained in the same way as Example 1, except that the solid additive 2 was used. The characteristics of the molded article obtained in Example 2 are listed in Table 1.

Example 3

A molded article was obtained in the same way as Example 1, except that the solid additive 3 was used. The characteristics of the molded article obtained in Example 3 are listed in Table 1.

Example 4

A molded article was obtained in the same way as Example 1, except that the resin 2 was used and that the drying time was changed to 30 minutes. The characteristics of the molded article obtained in Example 4 are listed in Table 1.

Example 5

A molded article was obtained in the same way as Example 1, except that the resin mixture A of Example 1 was applied two times with the amount of 25 g/$m^2$ each (25 g/$m^2$ was applied, and after drying, 25 g/$m^2$ was applied, and then dried). The characteristics of the molded article obtained in Example 5 are listed in Table 1.

Example 6

A specimen with the size of 130 mm × 130 mm was cut out from the continuous porous body. As the material for formation of the thin film layer, 100 parts by mass of the resin 3 and 15 parts by mass of the solid additive 2 were dry-blended, and then this blend was melt-kneaded by means of a biaxial extruder with the cylinder temperature of 200°C to obtain a resin mixture B in the pellet form. Next, the specimen was inserted into a mold for injection molding (cavity thickness of 3.5 mm) attached to an injection molding machine (J150 EII-P: manufactured by The Japan Steel Works, Ltd.); and then, the resin mixture B was insert-molded on one side of the specimen with the barrel temperature of 220°C and the mold temperature of 50°C to obtain a molded article. The characteristics of the molded article obtained in Example 6 are listed in Table 1.

Comparative Example 1

A molded article was obtained in the same way as Example 1, except that the solid additive was not used. The characteristics of the molded article obtained in Comparative Example 1 are listed in Table 1.

Discussion

As can be seen in Table 1, it was confirmed that the molded article according to the present invention was able to suppress permeation of water or a solution containing a surfactant into the surface of the continuous porous body. The molded articles in Examples 1 to 3 were able to provide the continuous porous body with a waterproof property by forming the thin film layer using various solid additives. In particular, in Example 1, because a hollow glass bead was used, the molded article with a suppressed mass increase from the continuous porous body, which was excellent in lightweightness, was able to be obtained. In Example 3, because a glass flake was used, the molded article having the thin film layer provided also with designability was able to be obtained. In Example 4, because the resin having a rapid curing rate was used, excessive penetration of the resin mixture into the continuous porous body was successfully suppressed, so that the molded article having an excellent waterproof property was able to be obtained. In Example 5, because the thin film layer was formed separately a plurality of times, the waterproof property thereof was able to be enhanced. On the other hand, in Comparative Example 1, because the thin film layer was formed only with the resin, many holes remained on the surface of the continuous porous body, so that it was difficult to express the waterproof property.

Table 1

| | | | Example 1 | Example 2 | Example 3 | Example 4 | Example 5 | Example 6 | Comparative Example 1 |
|---|---|---|---|---|---|---|---|---|---|
| Precursor of porous body | | | | | | | | | |
| | Fiber substrate | | | | | | | | |
| | | Reinforcing fiber | - | Carbon fiber | Carbon fiber | Carbon fiber | Carbon fiber | Carbon fiber | Carbon fiber | Carbon fiber |
| | | Fiber length | mm | 5 | 5 | 5 | 5 | 5 | 5 | 5 |
| | | Substrate preparation | Method | Wet method | Wet method | Wet method | Wet method | Wet method | Wet method | Wet method |
| | | Basis weight | g/m$^2$ | 100 | 100 | 100 | 100 | 100 | 100 | 100 |
| | | Fiber opening | State | Monofilament | Monofilament | Monofilament | Monofilament | Monofilament | Monofilament | Monofilament |
| | | Fiber dispersion | State | Random | Random | Random | Random | Random | Random | Random |
| | Resin substrate | | | | | | | | | |
| | | Resin | - | PP | PP | PP | PP | PP | PP | PP |
| | | Basis weight | g/m$^2$ | 100 | 100 | 100 | 100 | 100 | 100 | 100 |
| | Thickness | | mm | 1.12 | 1.12 | 1.12 | 1.12 | 1.12 | 1.12 | 1.12 |

EP 3 778 211 A1

(continued)

| Porous body | | | | | | | | | |
|---|---|---|---|---|---|---|---|---|---|
| Thickness | $\mu$m | 3.4 | 3.4 | 3.4 | 3.4 | 3.4 | 3.4 | 3.4 |
| Surface roughness: Ra1 | $\mu$m | 250 | 250 | 250 | 250 | 250 | 250 | 250 |
| Compression strength | MPa | 6 | 6 | 6 | 6 | 6 | 6 | 6 |
| Content rate of reinforcing fiber in porous body | % by volume | 6.7 | 6.7 | 6.7 | 6.7 | 6.7 | 6.7 | 6.7 |
| Content rate of resin in porous body | % by volume | 26.6 | 26.6 | 26.6 | 26.6 | 26.6 | 26.6 | 26.6 |
| Content rate of void in porous body | % by volume | 66.7 | 66.7 | 66.7 | 66.7 | 66.7 | 66.7 | 66.7 |
| Density of porous body | g/cm$^3$ | 0.36 | 0.36 | 0.36 | 0.36 | 0.36 | 0.36 | 0.36 |
| Form of porous body (air permeability) | - | Permeable | Permeable | Permeable | Permeable | Permeable | Permeable | Permeable |
| Shape of porous body | - | Flat plate | Flat plate | Flat plate | Flat plate | Flat plate | Flat plate | Flat plate |
| Thin film tank | | | | | | | | | |
| Resin | - | Resin 1 | Resin 1 | Resin 1 | Resin 2 | Resin 1 | Resin 3 | Resin 1 |
| Additive | - | Additive 1 | Additive 2 | Additive 3 | Additive 1 | Additive 1 | Additive 2 | - |
| Maximum size | $\mu$m | 60 | 150 | 120 | 60 | 60 | 150 | - |
| Density | g/cm$^3$ | 0.58 | 1.29 | 1.30 | 0.58 | 0.58 | 1.29 | 1.2 |
| Resin viscosity (23°C) | Pa·s | $5\times10^1$ | $6\times10^1$ | $5.5\times10^1$ | $2\times10^2$ | $5\times10^1$ | $6\times10^8$ | $5\times10^0$ |
| Resin viscosity (50°C, after 30 min) | Pa·s | $1\times10^5$ | $1.5\times10^5$ | $1.5\times10^5$ | $1\times10^6$ | $1\times10^5$ | $6\times10^8$ | $1\times10^5$ |
| Application amount | g/m$^2$ | 50 | 50 | 50 | 50 | 25 | 50 | 50 |
| Thickness | $\mu$m | 100 | 80 | 60 | 70 | 80 | 120 | 600 |
| Contact angle | | | | | | | | | |
| Water | ° | 90 | 90 | 90 | 90 | 90 | 90 | 90 |
| Solution | ° | 50 | 50 | 50 | 50 | 50 | 50 | 50 |

EP 3 778 211 A1

(continued)

| Molded article | | | | | | | | | |
|---|---|---|---|---|---|---|---|---|---|
| Permeation rate of water | % | 6 | 5 | 6 | 4 | 4 | 1 | 70 |
| Permeation rate of solution | % | 14 | 12 | 15 | 10 | 10 | 1 | 98 |

Industrial Applicability

According to the present invention, a molded article that is excellent in rigidity, lightweightness, and waterproof property can be obtained.

Reference Signs List

| 1 | Reinforcing fibers |
|---|---|
| 1a to 1f | Monofilament |
| 2 | Two-dimensional orientation angle |
| 3 | Press-machine's hot plate |
| 4 | Mold |
| 5 | Precursor |
| 6 | Spacer |
| 7 | Molded article |

**Claims**

1.  A molded article, comprising a continuous porous body provided with a thin film layer, the continuous porous body having a void that is continuous in a thickness direction of the continuous porous body, the thin film layer comprising a solid additive and a resin, wherein
    a permeation rate of water from a surface of the molded article on a side of the thin film layer is 10% or less.

2.  A molded article, comprising a continuous porous body provided with a thin film layer, the continuous porous body having a void that is continuous in a thickness direction of the continuous porous body, the thin film layer comprising a solid additive and a resin, wherein
    a permeation rate of a solution from a surface of the molded article on a side of the thin film layer is 30% or less, a contact angle of the solution on a glass substrate being 60° or less, which is measured in accordance with JIS R3257 (1999).

3.  The molded article according to claim 1 or 2, wherein the thin film layer penetrates into the void in the continuous porous body.

4.  The molded article according to any one of claims 1 to 3, wherein at least part of the solid additive is present in the void of the continuous porous body.

5.  The molded article according to any one of claims 1 to 4, wherein a thickness of the thin film layer is 500 $\mu$m or less.

6.  The molded article according to any one of claims 1 to 5, wherein a density of the thin film layer is 2.5 g/cm$^3$ or less.

7.  The molded article according to any one of claims 1 to 6, wherein a maximum size of the solid additive is 200 $\mu$m or less.

8.  The molded article according to any one of claims 1 to 7, wherein the solid additive is a hollow structural body.

9.  The molded article according to any one of claims 1 to 7, wherein the resin that constitutes the thin film layer is a thermosetting resin.

10.  The molded article according to claim 9, wherein a viscosity of the thermosetting resin at 23°C is in a range of $1 \times 10^1$ to $1 \times 10^4$ Pa·s.

11.  The molded article according to claim 9 or 10, wherein a viscosity of the thermosetting resin upon heating at 50°C for 30 minutes is $1 \times 10^4$ Pa·s or more.

12.  A method for producing a molded article as claimed in any one of claims 1 to 11, the method comprising applying a resin mixture of the solid additive and the resin to the continuous porous body, and thereafter, heating the resin mixture to form the thin film layer.

13. The method for producing the molded article according to claim 12, wherein the thin film layer comprises two or more layers.

# FIG.1

(a)

(b)

# FIG.2

## FIG.3

(a)

(b)

## FIG.4

(a)

(b)

(c)

## INTERNATIONAL SEARCH REPORT

International application No.

PCT/JP2019/013620

### A. CLASSIFICATION OF SUBJECT MATTER
Int.Cl. B32B5/18(2006.01)i, B32B5/28(2006.01)i, C08J5/04(2006.01)i
According to International Patent Classification (IPC) or to both national classification and IPC

### B. FIELDS SEARCHED
Minimum documentation searched (classification system followed by classification symbols)
Int.Cl. B32B5/18, B32B5/28, C08J5/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 10-128896 A (TAKIRON CO., LTD.) 19 May 1998, abstract, paragraphs [0007], [0011], [0016], fig. 1, 2 (Family: none) | 1-13 |
| A | JP 2014-524940 A (TORAY INDUSTRIES, INC.) 25 September 2014, entire text & US 2014/0087178 A1 & EP 2691199 A1 & CA 2830836 A & CN 103429371 A & KR 10-2014-0009460 A & RU 2013148117 A & BR 112013024886 A | 1-13 |
| A | JP 2015-98536 A (JX NIPPON OIL & ENERGY CORPORATION) 28 May 2015, entire text & US 2016/0297942 A1 & EP 3072918 A1 & CN 105764963 A & KR 10-2016-0096100 A | 1-13 |
| A | JP 1-226311 A (DAINIPPON INK AND CHEMICALS, INCORPORATED) 11 September 1989, entire text & US 5506039 A & DE 3907505 A & FR 2628358 A | 1-13 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 June 2019 (13.06.2019) | 25 June 2019 (25.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT

| | International application No. |
|---|---|
| | PCT/JP2019/013620 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2014/162873 A1 (TORAY INDUSTRIES, INC.) 09 October 2014, entire text & US 2016/0303824 A1 & EP 2982504 A1 & CA 2908023 A & CN 105073403 A & KR 10-2015-0138202 A & TW 201444678 A | 1-13 |
| A | FR 2638120 A1 (J. GAILLON S. A.) 27 April 1990, entire text (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6123965 B
- JP 2016078451 A
- JP H05124143 B
- WO 2015029634 A